# EUROPÄISCHE PATENTSCHRIFT

(11) **EP 0 487 861 B1**
(45) Veröffentlichungstag und Bekanntmachung des Hinweises auf die Patenterteilung: **10.01.1996**
(21) Anmeldenummer: 91116903.5
(22) Anmeldetag: 04.10.1991
(51) Int. Cl.: F15B 11/12, F16H 63/30, F16H 61/00

(54) **Dreistellungszylindersystem**
Three position actuator system
Système d'actionneur à trois positions

(30) Priorität: 30.11.1990 DE 4038170
(43) Veröffentlichungstag der Anmeldung: 03.06.1992
(73) Patentinhaber: CLAAS OHG, D-33426 Harsewinkel (DE)
(72) Erfinder: Fredriksen, Nils, W-4834 Harsewinkel (DE); Mohr, Jan-Hendrik, W-3587 Borken (DE)

(56) Entgegenhaltungen:
- EP-A- 0 350 812
- CA-A- 942 605
- DE-B- 1 576 139
- DE-C- 945 609
- DE-C- 2 133 893
- DE-U- 1 977 298
- US-A- 3 298 483
- US-A- 4 653 352

## Beschreibung

Die Erfindung bezieht sich auf ein Dreistellungszylindersystem mit einem Stellzylinder mit einer doppelseitig druckmittelbeaufschlagbaren, über Wegeventile steuerbaren Doppelkolbenanordnung, die mit einem Schaltelement gekoppelt ist und aus zwei entgegengesetzt wirkenden, in einem gemeinsamen Zylindergehäuse verschiebbaren Doppelkolben gebildet ist, von denen jedem der beiden in einem Zylindergehäuse je ein Druckraum mit je einem Druckmittelanschluß zugeordnet ist und wobei jeweils der ersten Kolben jedes Doppelkolbens mit dem Schaltelement bewegungsstarr und jeweils der zweite Kolben jedes Doppelkolbens mit dem ersten Kolben freiverschieblich verbunden ist, die beiden ersten Kolben jeweils einen Mitnahmeanschlag für ihren zweiten Kolben haben, die beiden Doppelkolben bei beiderseitigem Druckausgleich mit ihrem freiverschieblichen, zweiten Kolben gegen einen Anschlag am Zylindergehäuse in einer etwa mittigen Neutralstellung gehalten sind, die beiden Doppelkolben wechselweise bei jeweils einseitiger Druckbeaufschlagung aus der Neutralstellung verschiebbar sind, wobei der jeweils drucklose Doppelkolben mit seinen beiden Kolben durch den druckbeaufschlagten ersten Kolben seine Schaltverschiebung erhält.

Ein derartiges Dreistellungszylindersystem ist aus der CA-A-942 605 bekannt. Hierbei handelt es sich um eine Vorrichtung, die in zwei Teilgehäusen untergebracht ist, die als gestufte Zylindergehäuse ausgebildet sind, und mit einem umfangsmäßigen Muffengewinde zusammengehalten sind. Die hydraulischen Zuführungen sind über Schraubbuchsen im Gehäuse vorgesehen und das Schaltelement ist als eine Schaltstange stirnseitig durch eine Gehäusedichtung herausgeführt und mit einem Gewindeanschluß versehen. Für einen Anbau des Zylindersystems an ein Getriebe sind somit Anschlußleitungen zu verlegen und Verbindungen herzustellen.

Weiterhin ist aus der US-A-3 298 483 ein Dreistellungszylindersystem bekannt, dessen Zylinder in ein einstückiges Gehäuse eingebracht sind das auf eine Montageplatte mit hydraulischen Versorgungskanälen aufgeschraubt ist. Die Zylinder sind endseitig dicht verschraubt. Die inneren, ersten Kolben sind mit einem Stellglied verbunden, das seitlich durch einen Gehäusedurchbruch herausgeführt ist und ein Schaltgetriebe steuert. Die äußeren, zweiten Kolben weisen jeweils beidseitig hydraulisch beaufschlagte Druckräume auf, weswegen drei Zweiwege-Steuerventile zur Ansteuerung erforderlich sind und eine relativ große Baulänge gegeben ist.

Weiterhin ist aus der DE-B-1 576 139 ein ähnliches Dreistellungszylindersystem bekannt, bei dem jedoch die ersten und zweiten Kolben der Doppelkolben aneinander anschlagend axial gereiht angeordnet sind und wobei die querschnittsmäßig größeren zweiten Kolben jeweils Dämpfungsdurchlässe zum ersten Kolben hin aufweisen, wodurch eine Einstellverlangsamung erreicht werden soll.

In mehrstufigen Ganggetrieben z. B. werden aus Kostengründen überlicherweise je zwei Gänge mit einer Schaltvorrichtung bedient. Diese Schaltvorrichtung muß drei Schaltstellungen erbringen, nämlich eine Neutralstellung, eine eingeschaltete 1. Gang-Stellung und eine eingeschaltete 2. Gang-Stellung. Aus diesem Grunde eignen sich hydraulische Dreistellungszylindersysteme für die Ganggetriebeansteuerung.

Aufgabe der Erfindung ist es, eine einfache, aus wenigen Bauteilen kostengünstig herstellbare und betriebssichere Elektro-Druckmittel-Schaltvorrichtung für zwei Gangstellungen und einer ohne elektrische Regelung erreichbaren sicheren Neutralstellung zu schaffen, die mit ihren gesamten funktionellen Bauelementen zu einer kompakten, vormontierten Baueinheit zusammengesetzt ist, die in einfacher und jederzeit kontrollierbarer Weise an das Getriebe montierbar und von diesem demontierbar ist.

Diese Aufgabe wird erfindungsgemäß durch die kennzeichnenden Merkmale des Patentanspruches 1 gelöst, wobei die in den sich daran anschließenden, abhängigen Unteransprüchen aufgeführten Gestaltungsmerkmale vorteilhafte und förderliche Weiterbildungen der Aufgabenlösung darstellen.

Die Schaltvorrichtung ist mit ihren Bauteilen als kompakte, vormontierte Einheit mit einem Getriebe einfach zu verbinden und in der Funktion zu überprüfen.

Die erfindungsgemäße Schaltvorrichtung zeigt eine besonders einfache und kostengünstige sowie betriebssichere Konstruktion, die zum sicheren Schalten aus der Neutralstellung in die beiden Schaltstellungen und zurück mit wenigen, unterschiedlichen Bauteilen, nur zwei Druckmittelräumen und je einem Druckmittelanschluß und zwei Steuerorganen (Wegeventilen) auskommt und ein Durchschalten ausschließt.

Die beiden Schaltstellungen werden über die beiden Magnet-Wegeventile mit Druckmittel gesteuert, und die Neutralstellung wird unabhängig, also ohne elektrische bzw. elektronische Regelung erreicht, was eine optimale Betriebssicherheit und Schaltung gewährleistet und eine sehr hohe Schaltgeschwindigkeit zuläßt.

Außerdem arbeitet die Schaltvorrichtung aufgrund ihrer Kolbengestaltung mit günstigen Ein- und Ausschaltkräften, die bevorzugt gleich groß sind.

Die Gestaltung des Kolbens aus zwei Doppelkolben und unabhängig voneinander bewegbaren Einzelkolben und damit und mit der Schaltgabel zusammenwirkenden Anschlägen ergibt auf kurzen Hubwegen die sichere Gangschaltung und automatische stromlose und druckausgleichende Bewegung in die Neutralstellung.

Die Schaltvorrichtung ist desweiteren mit ihren gesamten funktionellen Bauelementen zu einer kompakten, vormontierten Baueinheit zusammengesetzt, die in einfacher und jederzeit kontrollierbarer Weise an dem Getriebe montierbar und demontierbar ist.

Die Erfindung stellt ein elektrohydraulisches Schaltzylindersystem dar, mit dem drei Schaltpositionen durch Verwendung von nur zwei Magnetventilen und zwei Druckanschlüßen realisiert werden. Derartige Systeme können vorteilhaft z.B. für die Gangschaltung von elektrisch oder elektronisch gesteuerten Zahnradgetrieben für den mobilen oder stationären Einsatz eingesetzt werden.

Auf den Zeichnungen ist ein Ausführungsbeispiel in Variationen dargestellt, welches nachfolgend näher erläutert wird.

Es zeigt:
- Fig. 1: eine Seitenansicht im teilweisen Schnitt einer Schaltvorrichtung,
- Fig. 2: eine Draufsicht im teilweisen Schnitt auf dieselbe Schaltvorrichtung,
- Fig. 3: eine schematische Darstellung im Längsschnitt des Stellzylinders, der Schaltvorrichtung mit Doppelkolben, Schaltgabel, zwei Druckräumen mit je einem Druckanschluß und zwei Wegeventilen in der Neutral stellung der Schaltgabel,
- Fig. 4: einen Längsschnitt durch den Stellzylinder gemäß Schnittlinie AA in Fig. 3,
- Fig. 5: einen Querschnitt durch den Stellzylinder gem. Schnittlinie BB in Fig. 4,

Das Dreistellungszylindersystem, beispielsweise als Schaltvorrichtung für ein mehrstufiges Zahnradgetriebe für beispielsweise motorisch angetriebene landwirtschaftliche Fahrzeuge, wie Schlepper, weist einen Stellzylinder (1) auf, in dessen Zylindergehäuse (2) ein doppelseitig druckmittelbeaufschlagbarer Kolben angeordnet ist, der aus zwei entgegengesetzt wirkenden verschiebbaren Doppelkolben (3,4) gebildet ist. Jedem der beiden Doppelkolben (3,4) ist im Zylindergehäuse (2) ein Druckraum (5,6) mit einem Druckmittelanschluß (7,8) zugeordnet.

Der eine Kolben (9, 10) jedes Doppelkolbens (3,4) ist mit einem Schaltelement, wie einer Schaltgabel (11) bewegungsstarr und der zweite Kolben (13,14) jedes Doppelkolbens (3,4), der als Ringkolben ausgebildet ist, mit dem ersten Kolben (9,10) freiverschieblich verbunden. Die beiden Doppelkolben (3,4) sind bei Druckausgleich mit ihrem freiverschieblichen zweiten Kolben (13,14) gegen einen Anschlag (15) des Zylindergehäuses (2) in der Neutralstellung gehalten; die beiden Doppelkolben (3,4) sind wechselweise bei Druckbeaufschlagung aus dieser Neutralstellung in eine Schaltstellung verschiebbar, wobei der drucklose Doppelkolben (3 oder 4) mit seinen beiden Kolben (9, 10) durch den ersten Kolben (9 oder 10) des druckbeaufschlagten Doppelkolbens (3 oder 4) seine Schaltverschiebung erhält. Die beiden Doppelkolben (3,4) sind in bevorzugter Weise mit ihren beiden Kolben (9, 13/10,14) koaxial angeordnet. Die beiden mit der Schaltgabel (11) verbundenen ersten Kolben (9,10) weisen jeweils einen Mitnahmeanschlag (16) für ihren zweiten Kolben (13,14) auf.

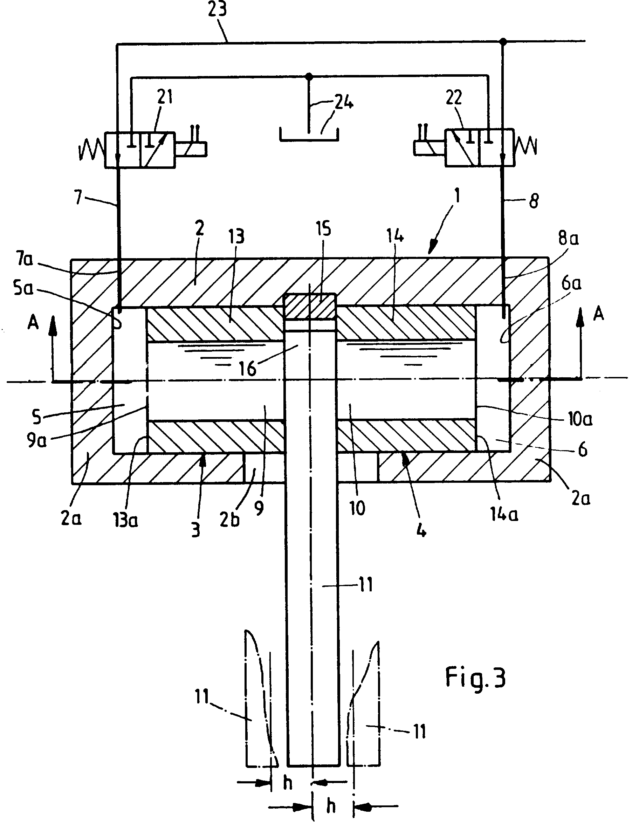

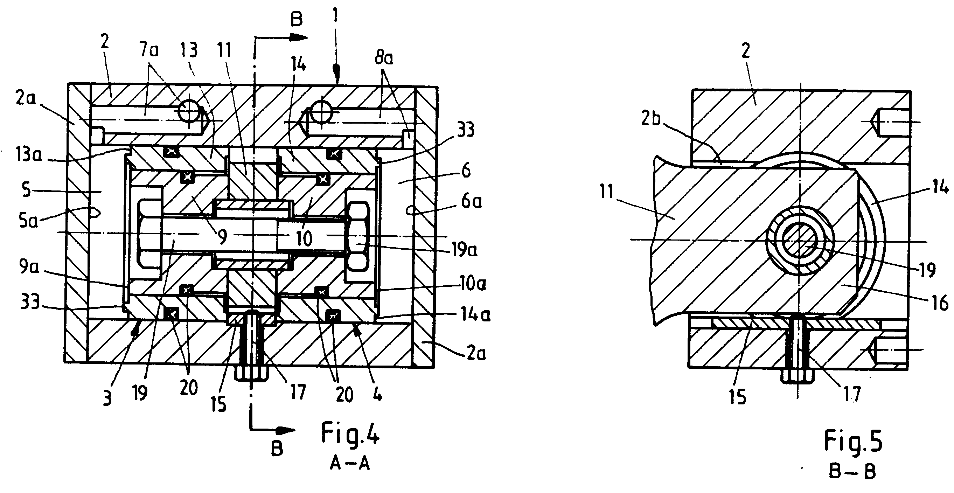

Der Anschlag (15) für die beiden zweiten Kolben (13,14) der Doppelkolben (3,4) ist in der mittig liegenden Neutralstellung im Zylindergehäuse (2) angeordnet und in bevorzugter Weise von einem im Zylindergehäuse (2) befestigten, vorzugsweise durch Schrauben (17) festgelegten Steg gebildet (vgl. Fig. 3 bis 5). Der Anschlag (16) der ersten Kolben (9,10) für die Mitnahme der zweiten Kolben (13,14) in die jeweilige Schaltstellung kann von der zwischen den beiden Doppelkolben (3,4) sich erstreckenden Schaltgabel (11) gebildet sein (vgl. Fig. 3 bis 5), erläßt sich aber auch von einem an den beiden Kolben (9,10) angeformten Bund (18) Ring, Steg oder dgl. bilden (vgl. Fig. 6 und 7). Die beiden Anschläge (15,16) sind derart in der Gestaltung (Breite) aufeinander abgestimmt, daß beide Kolben (9,13/10,14) beider Doppelkolben (3,4) in der Neutralstellung spielfrei gehalten sind. Der ersten Kolben (9,10) jedes Doppelkolbens (3,4) ist von einem Zylinderkolben und der zweite Kolben (13,14) von einer darum verschiebbar gehaltenen Kolbenhülse gebildet. Die beaufschlagbaren Druckflächen (9a,13a/10a,14a) der beiden Kolben (9,13/10,14) jedes Doppelkolbens (3,4) sind in bevorzugter Weise gleich groß. Es besteht allerdings auch die Möglichkeit, die beiden Druckflächen (9a,13a/10a,14a) der beiden Kolben (9,13/10,14) jedes Doppelkolbens (3,4) unterschiedlich groß oder auch die beiden Gesamtdruckflächen der beiden Doppelkolben (3,4) zueinander unterschiedlich groß auszuführen. Die Schaltgabel (11) ist in bevorzugter Weise zwischen den beiden Doppelkolben (3,4) angeordnet und durch eine axiale Schraube (19) mit Mutter (19a) mit den beiden Zylinderkolben (9,10) zu einer Verschiebeeinheit verbunden (vgl. Fig. 4.). Die Kolben (9,10) können durch Dichtungen (20) gegenüber den Kolben (13,14) und die Kolben (13,14) durch weitere Dichtungen (20) gegenüber dem Zylindergehäuse (2) abgedichtet sein.
Die Schaltgabel (11) ragt durch einen Ausbruch (2b) aus dem Zylindergehäuse (2) heraus.

Das Zylindergehäuse (2) ist in bevorzugter Weise als eckiger Blockkörper ausgeführt und an seinen beiden Stirnenden durch je einen Gehäusedeckel (2a) abgedichtet verschlossen. Auch besteht die Möglichkeit, dieses Zylindergehäuse (2) von einem Rohrkörper mit stirnseitigen Deckeln zu bilden.

Die Steuerung der beiden Doppelkolben (3,4) erfolgt durch zwei Steuerorgane, vorzugsweise Wegeventile (21,22), die beispielsweise als 3/2-Magnetventile gebildet sind. Jedes der beiden Wegeventile (21, 22) steht über dem Druckanschluß (7,8) und eine Verbraucherbohrung (7a,8a) des Zylindergehäuses (2) mit einem Druckraum (5,6) in Verbindung. Weiterhin sind die beiden Wegeventile (21,22) mit einer Druckleitung (23) und einem Tankanschluß (24) verbunden.

Die Schaltung des einen Dreistellungszylinder bildenden Stellzylinders (1) geschieht wie folgt:

### 1. Neutralstellung

In der Neutralstellung sind beide Magnetventile (21, 22) ausgeschaltet und die Zylinderflächen (9a,13a/10a,14a) sind mit dem Systemdruck beaufschlagt, so daß in beiden Druckräumen (5,6) gleicher Druck herrscht und beide Doppelkolben (3,4) mit der Schaltgabel (11) exakt in der Neutrallage gehalten werden, wobei beide Kolbenhülsen (13,14) an dem mittigen Anschlag (15) und beide Kolben (9,10) mit dem Anschlag (16) an den Stirnflächen der Kolbenhülsen (13,14) anliegen (vgl. Fig. 3). Auch würde bei einer ausgelenkten Lage der Doppelkolben (3,4) eine Bewegung derselben in die Neutralstellung erfolgen, weil in allen Positionen beiderseits der Neutrallage eine Überschußkraft entsprechend der Ringfläche (13a,14a) der Zylinderhülsen (13,14) auf die Doppelkolben (3,4) einwirken würde und zwar solange, bis die entsprechend ausgelenkte Zylinderhülse (13 od. 14) genau wie die gegenüberliegende Zylinderhülse (14 od. 13) gegen den Anschlag (15) verschoben worden ist, so daß auf beiden Seite der Doppelkolben (3,4) Kräftegleichheit herrscht.

### 2. Schaltstellung nach rechts

Für diesen Schaltvorgang wird das Magnetventil (22) erregt, während das Magnetventil (21) ausgeschaltet bleibt. Der Hydraulikdruck im Druckraum (6) bricht zusammen und die Schaltkraft entsprechend des Zylinderkolbens (9) bewegt die Schaltgabel (11) mit dem zweiten Zylinderkolben (10) nach rechts, bis der Hub (h) zurückgelegt ist und die Zylinderhülse (14) an der Endwand (6a) des Druckraumes (6) anliegt. Bei diesem Schaltvorgang wird nur die Druckfläche (9a) des Zylinderkolbens (9) beaufschlagt und die Zylinderhülse (13) des Doppelkolbens (3) liegt am Anschlag fest an und der Kolben (9) wird gegenüber der Zylinderhülse (13) mit der gesamten Schalteinheit nach rechts verschoben, wobei der Anschlag (16) auch die zweite Zylinderhülse (14) mitnimmt und diese gemeinsam mit ihrem Zylinderkolben (10) verfahren wird. Das Zurückschalten in die Neutrallage erfolgt wie unter 1. beschrieben, in dem das Magnetventil (22) wieder ausgeschaltet wird und somit in beiden Druckkammern (5,6) sich gleicher Druck aufbaut.

### 3. Schaltstellung nach links

Für diesen Schaltvorgang wird das Magnetventil (21) erregt und das Magnetventil (22) ausgeschaltet, wobei der Schaltvorgang dann analog zu dem Ablauf gemäß 2. erfolgt, und die Schaltstellung wiederum beendet ist, wenn die Zylinderhülse (13) am Druckraumboden (5a) anliegt.

In Fig. 3 sind in strichpunktierten Linien die beiden Schaltstellungen der Schaltgabel (11) sowohl nach rechts als auch nach links dargestellt.

Durch geeignete Wahl der Durchmesserverhältnisse von Zylinderkolben (9,10) und Zylinderhülsen (13,14) können die ein- und ausschaltenden Schaltkräfte zueinander variiert werden.

In einer vorteilhaften Ausgestaltung der erfindungsgemäßen Schaltvorrichtung sind die Druckflächen (9a,10a) der Zylinderkolben (9,10) genauso groß wie die Ringflächen (13a, 14a) der Zylinderhülsen (13,14) gewählt, wodurch die Einschaltkraft gleich der Ausschaltkraft ist. Beispielsweise kann der Zylinderkolben (9,10) einen Durchmesser von 36 mm und die Zylinderhülse (13,14) einen Außendurchmesser von 51 mm haben.

Bei einer weiteren Möglichkeit ist die Ausschaltkraft größer als die Einschaltkraft vorgesehen.

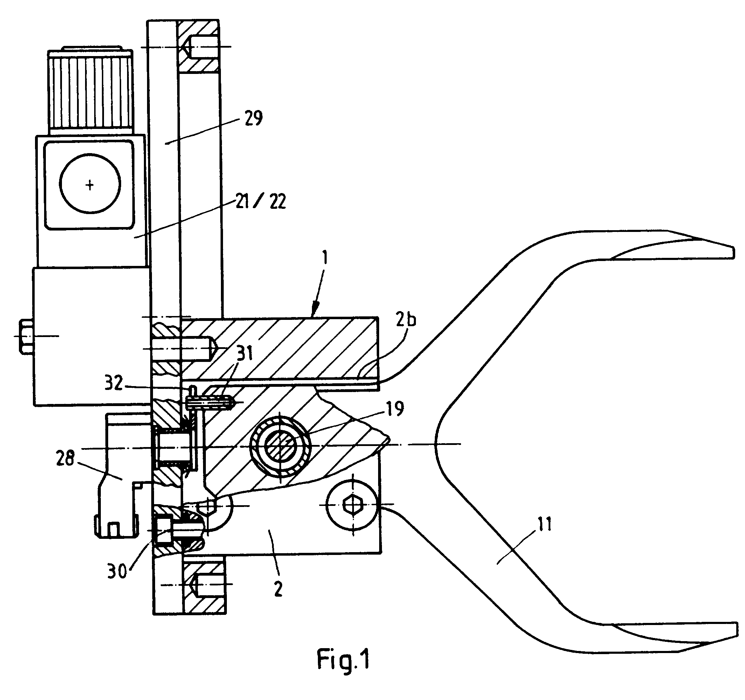

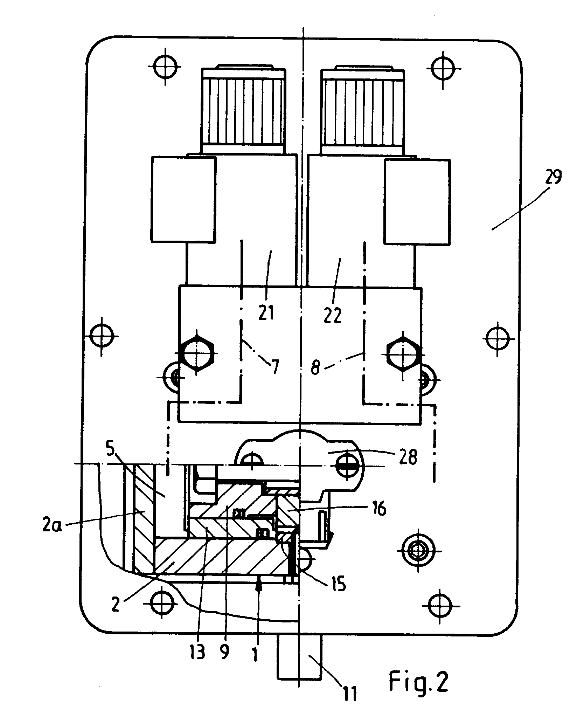

Wie Fig. 1 und 2 zeigt, ist die Schaltvorrichtung mit ihren beiden zugehörigen Wegeventilen (21,22) und ggfls. einem Lagerückmelder (28) auf einer als Gehäusedeckel ausgebildeten, die Druckmittelkanäle (7,7a/8,8a) beinhaltenden Platte (29) als z.B. auf dem Getriebegehäuse festlegbar, vormontierte Schalteinheit ausgebildet. Dabei läßt sich diese Schaltvorrichtung in einfacher Weise durch Schrauben (30) mit der Platte (29) verbinden und dann diese Platte ebenfalls durch Schrauben als Gehäusedeckel auf dem Getriebegehäuse festlegen. Die Schaltgabel (11) ist, wie Fig. 1 zeigt, mit einem Mitnehmerstift (31) ausgestattet, der mit einer Mitnehmergabel (32) des Lagerückmelders (28) zusammenwirkt und somit am Lagerückmelder (28) die jeweilige Schaltstellung bzw. Neutralstellung abgelesen werden kann.

Wie aus Fig. 4 ersichtlich, sind die Kolbenhülsen (13,14) an ihren Druckflächen (13a,14a) mit angedrehten Ringvorsprüngen (33) versehen, durch die ein Festsaugen der Kolbenhülsen (13,14) in den jeweiligen Schaltendstellungen verhindert und eine vereinfachte Druckbeaufschlagung in diesen Endstellungen erreicht wird.

## Patentansprüche

1. Dreistellungszylindersystem mit einem Stellzylinder mit einer doppelseitig druckmittelbeaufschlagbaren, über Wegeventile (21, 22) steuerbaren Doppelkolbenanordnung (3, 4), die mit einem Schaltelement (11, 12) gekoppelt ist und aus zwei entgegengesetzt wirkenden, in einem gemeinsamen Zylindergehäuse (2) verschiebbaren Doppelkolben (3, 4) gebildet ist, von denen jedem der beiden in einem Zylindergehäuse (2) je ein Druckraum (5, 6) mit je einem Druckmittelanschluß (7a, 8a) zugeordnet ist und wobei jeweils der erste Kolben (9, 10) jedes Doppelkolbens (3, 4) mit dem Schaltelement (11, 12) bewegungsstarr und jeweils der zweite Kolben (13, 14) jedes Doppelkolbens (3, 4) mit dem ersten Kolben (9, 10) freiverschieblich verbunden ist, die beiden ersten Kolben (9, 10) jeweils einen Mitnahmeanschlag (16) für ihren zweiten Kolben (13, 14) haben, die beiden Doppelkolben (3, 4) bei beiderseitigem Druckausgleich mit ihrem freiverschieblichen, zweiten Kolben (13, 14) gegen einen Anschlag (15) am Zylindergehäuse (2) in einer etwa mittigen Neutralstellung gehalten sind, wobei der Mitnehmeranschlag (16) auf den Anschlag (15) derart abgestimmt ist, daß beide Kolben (9, 13; 10, 14) beider Doppelkolben in der Neutralstellung spielfrei gehalten sind, die beiden Doppelkolben (3, 4) wechselweise bei jeweils einseitiger Druckbeaufschlagung aus der Neutralstellung verschiebbar sind, wobei der jeweils drucklose Doppelkolben (3, 4) mit seinen beiden Kolben (9, 13; 10, 14) durch den druckbeaufschlagten ersten Kolben (10, 9) seine Schaltverschiebung erhält, dadurch gekennzeichnet, daß das mit seinen beiden zugehörigen Wegeventilen (21, 22) und einem Lagerückmelder (28) auf einer als Gehäusedeckel ausgebildeten, die Druckmittelanschlüsse (7a, 8a) und damit verbundene Druckmittelkanäle (7, 8) beinhaltenden Platte (29) als auf einem Getriebegehäuse festlegbare, vormontierte Schalteinheit (Schaltvorrichtung) ausgebildet ist, daß das Schaltelement (11) eine Schaltgabel (11) ist, die zwischen beiden Doppelkolben (3, 4) angeordnet und mit den ersten Kolben (9, 10) verschraubt ist und gleichzeitig den Mitnahmeanschlag (16) bildet, und daß das Zylindergehäuse (2) einteilig ist, beiderseits durch Deckel (2a) verschlossen ist, die die Endwände (5a, 6a) der Druckräume (5, 6) und in den Schaltstellungen für den jeweils drucklosen zweiten Kolben (13, 14) einen Anschlag bilden, und daß das Zylindergehäuse (2) einen Ausbruch (2b) aufweist, durch den das Schaltelement (11) hindurchragt.

2. Dreistellungszylindersystem nach Anspruch 1, dadurch gekennzeichnet, daß der Anschlag (15) für die beiden zweiten Kolben (13, 14) von einem im Zylindergehäuse (2) befestigten, vorzugsweise durch Schrauben (17) festgelegten Steg gebildet ist.

3. Dreistellungszylindersystem nach Anspruch 1 oder 2, dadurch gekennzeichnet, daß die beiden zweiten Kolben (13, 14) unterschiedlich große, beaufschlagbare Druckflächen (13a, 14a) aufweisen.

## Claims

1. Three-position cylinder system comprising an operating cylinder having a double-acting double-piston arrangement (3, 4) which can be controlled via directional control valves (21, 22), is coupled to a shift element (11, 12) and is formed from two double pistons (3, 4) acting in opposite direction and displaceable in a common cylinder housing (2), one pressure space (5, 6) each having one pressure-medium connection (7a, 8a) each being allocated to each of the two double pistons (3, 4) in a cylinder housing (2), and in each case the first piston (9, 10) of each double piston (3, 4) being connected to the shift element (11, 12) in a motionally fixed manner and in each case the second piston (13, 14) of each double piston (3, 4) being connected to the first piston (9, 10) in a freely displaceable manner, the two first pistons (9, 10) each having a driving stop (16) for their second piston (13, 14), the two double pistons (3, 4), during pressure balance on both sides, being held with their freely displaceable, second piston (13, 14) against a stop (15) on the cylinder housing (2) in an approximately central neutral position, the driving stop (16) being adapted to the stop (15) in such a way that both pistons (9, 13; 10, 14) of both double pistons are held free of play in the neutral position, the two double pistons (3, 4) being alternately displaceable from the neutral position when pressure acts on one side in each case, the respective pressureless double piston (3, 4), with its two pistons (9, 13; 10, 14), being given its shift displacement by the first piston (10, 9) acted upon by pressure, characterized in that the [lacuna], with its two associated directional control valves (21, 22) and a position-feedback means (28) on a plate (29) designed as a housing cover and containing the pressure-medium connections (7a, 8a) and pressure-medium passages (7, 8) connected thereto, is designed as a preassembled shift unit (shift mechanism) which can be secured to a transmission case, in that the shift element (11) is a shift fork (11) which is arranged between both double pistons (3, 4) and is screwed to the first pistons (9, 10) and at the same time forms the driving stop (16), and in that the cylinder housing (2) is in one piece and is closed on both sides by caps (2a) which form the end walls (5a, 6a) of the pressure spaces (5, 6) and in the shift positions form a stop for the respective pressureless second piston (13, 14), and in that the cylinder housing (2) has an aperture (2b) through which the shift element (11) projects.

2. Three-position cylinder system according to Claim 1, characterized in that the stop (15) for the two second pistons (13, 14) is formed by a web fastened in the cylinder housing (2) and preferably secured by screws (17).

3. Three-position cylinder system according to Claim 1 or 2, characterized in that the two second pistons (13, 14) have pressure areas (13a, 14a) which are of different size and can be acted upon.

## Revendications

1. Système d'actionneur à trois positions ayant un cylindre d'actionnement avec un dispositif à double piston (3, 4) commandable par des distributeurs (21, 22), pouvant être sollicité des deux côtés par un fluide de pression, lequel dispositif est couplé à un élément de commutation (11, 12) et est formé de deux doubles pistons (3, 4) à action opposée, pouvant se déplacer dans un carter de cylindre commun (2), dont chacun des deux est affecté dans un carter de cylindre (2) à une chambre de pression (5, 6) respective avec une connexion respective pour fluide de pression (7a, 8a), et où à chaque fois le premier piston (9, 10) de chaque double piston (3, 4) est connecté rigidement en mouvement avec l'élément de commutation (11, 12) et à chaque fois le deuxième piston (13, 14) de chaque double piston (3, 4) est connecté de manière librement déplaçable avec le premier piston (9, 10), les deux premiers pistons (9, 10) ayant à chaque fois une butée d'entraînement (16) pour leur deuxième piston (13, 14), les deux doubles pistons (3, 4), dans le cas d'un équilibre de pression des deux côtés, étant maintenus avec leur deuxième piston (13, 14) librement déplaçable contre une butée (15) sur le carter du cylindre (2) dans une position neutre située à peu près au milieu, la butée d'entraînement (16) étant adaptée sur la butée (15) de telle manière que les deux pistons (9, 13; 10, 14) des deux doubles pistons sont maintenus sans possibilité de jeu dans la position neutre, les deux doubles pistons (3, 4) sont déplaçables alternativement hors de la position neutre à chaque sollicitation de pression d'un côté, le double piston (3, 4) à chaque fois non soumis à pression avec ses deux pistons (9, 13; 10, 14) étant soumis à son déplacement de commutation par l'effet du premier piston (10, 9) sollicité, caractérisé en ce que le [lacune] est formé avec ses deux distributeurs afférents (21, 22) et un dispositif d'indication de retour de position (28) sur une plaque (29) formée en tant que couvercle de carter, contenant les connexions de fluide de pression (7a, 8a) et les canaux de fluide de pression (7, 8) qui leur sont raccordés, en tant qu'unité de commutation (dispositif de commutation) prémontée, pouvant être fixée sur un carter de boîte de vitesse, en ce que l'élément de commutation (11) est une fourchette de commutation (11), qui est disposée entre les deux pistons doubles (3, 4) et est vissée au premier piston (9, 10) et constitue en même temps la butée d'entraînement (16), et en ce que le carter de cylindre (2) est d'une seule pièce, est fermé des deux côtés par des couvercles (2a), qui forment les parois extrêmes (5a, 6a) des chambres de pression (5, 6) et dans les positions de commutation une butée pour le deuxième piston (13, 14) à chaque fois non soumis à pression, et en ce que le carter de cylindre (2) présente un perçage (2b), à travers lequel se projette l'élément de commutation (11).

2. Système d'actionneur à trois positions selon la revendication 1, caractérisé en ce que la butée (15) pour les deux deuxièmes pistons (13, 14) est formée par une traverse fixée dans le carter du cylindre (2), fixée de préférence par des vis (17).

3. Système d'actionneur à trois positions selon la revendication 1 ou 2, caractérisé en ce que les deux deuxièmes pistons (13, 14) présentent des faces de pression (13a, 14a) de grandeur différente pouvant être sollicitées.
